# EUROPÄISCHE PATENTSCHRIFT

(11) **EP 0 661 476 B1**
(45) Veröffentlichungstag und Bekanntmachung des Hinweises auf die Patenterteilung: **26.11.1997**
(21) Anmeldenummer: 94108766.0
(22) Anmeldetag: 08.06.1994
(51) Int. Cl.: F16F 15/167, F16F 15/136

(54) **Torsionsschwingungstilger**
Torsional vibration damper
Amortisseur de vibrations torsionelles

(30) Priorität: 24.12.1993 DE 4344426
(43) Veröffentlichungstag der Anmeldung: 05.07.1995
(73) Patentinhaber: Firma Carl Freudenberg, 69469 Weinheim (DE)
(72) Erfinder: Schwerdt, Hans-Werner, D-69514 Laudenbach (DE); Lau, Helmut, Dr., D-69488 Birkenau (DE)

(56) Entgegenhaltungen:
- DE-A- 3 516 104
- GB-A- 920 642
- US-A- 3 303 719
- US-A- 3 986 411
- PATENT ABSTRACTS OF JAPAN vol. 13, no. 449 (M-878) (3797) 9. Oktober 1989 & JP-A-01 172 650 (BRIDGESTONE CORP.)

## Beschreibung

Die Erfindung betrifft einen Torsionsschwingungsdämpfer nach dem Oberbegriff von Anspruch 1.

Ein solcher Torsionsschwingungsdämpfer ist aus der US-A-3 986 411 bekannt. Die Federringe werden in kreisringförmige, sich in axialer Richtung erstreckende Spalte eingefügt, die radial innenseitig jeweils vom Nabenring und radial außenseitig jeweils vom Schwungring begrenzt sind. Die Spalte weisen, jeweils ausgehend von den axialen Stirnseiten des Torsionsschwingungsdämpfers, eine übereinstimmende radiale Weite auf, wobei die Federringe in die Spalte eingeklebt sind, um deren Verlagerung und Verlust zu vermeiden.

Ein weiterer Torsionsschwingungsdämpfer ist aus der US-A-3 303 719 bekannt. Der Trägheitsring ist dabei in axialer Richtung geteilt, um die Federringe einfügen zu können. Die Herstellung eines solchen Torsionsschwingungsdämpfers ist dementsprechend aufwendig.

Der Erfindung liegt die Aufgabe zugrunde, einen Torsionsschwingungsdämpfer der eingangs genannten Art derart weiterzuentwickeln, daß sich eine vereinfachte Herstellbarkeit ergibt.

Diese Aufgabe wird erfindungsgemäß bei einem Torsionsschwingungsdämpfer der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Torsionsschwingungsdämpfer ist es vorgesehen, daß die Federringe unter elastischer Verformung ihres Querschnitts in den Ringspalt eingefügt sind, wobei zur Festlegung des Schwungrings am Nabenring dieser zwei längs des Ringspalts zueinander versetzt angeordnete radiale Nuten und der Schwungring radial gegenüberliegend zu diesen Nuten ebensolche radiale Nuten aufweist, wobei in jeweils radial gegenüberliegende Nuten des Schwungsrings und des Nabenrings der jeweilige Federring unter elastischer Querschnittsverformung eingreift.

Der Ringspalt ist an der Stelle der Federringe zu jeweils einer Nut erweitert. Die Federringe werden hierdurch im montierten Zustand in axialer Richtung beiderseits durch sich im wesentlichen senkrecht zur Öffnungsrichtung des Spalts erstreckende Flächen abgestützt, was unerwünschte Relativverlagerungen während der bestimmungsgemäßen Verwendung verhindert. Besonders gute Eigenschaften werden in dieser Hinsicht erreicht, wenn die jeweilige Nut und der Ringspalt stufenartig voneinander abgegrenzt sind.

Der Ringspalt soll an den Stellen der Federringe ein im wesentlichen spiegelbildlich begrenztes Profil haben. Unerwünschte Relativverschiebungen der Federringe in axialer Richtung werden dadurch besonders zuverlässig verhindert.

Nach einer anderen Ausgestaltung ist es vorgesehen, daß der Zwischenraum der Federringe mit einer Flüssigkeit gefüllt ist. Hierbei kann es sich um eine schmierend wirkende Flüssigkeit handeln, wenn angestrebt wird, unter Verwendung des erfindungsgemäßen Torsionsschwingungsdämpfers besonders gute Tilgerwirkungen zu erzielen.

Nach einer anderen Ausgestaltung ist es vorgesehen, in dem Zwischenraum eine Flüssigkeit einer Viskosität bei Raumtemperatur von mindestens 500 mPas zu verwenden. Die resultierende Scherviskosität ist bei einer solchen Ausführung derart groß, daß gute Dämpfungswirkungen bei der Einleitung von Drehschwingungen erreicht werden können.

Die beiden Federringe können einen voneinander abweichenden Innendurchmesser haben. Neben einer guten Führung des Außenringes durch den Innenring läßt sich hierdurch eine besonders gute Dämpfungs- bzw. Tilgerwirkung erzielen.

Eine besonders gute Dauerhaltbarkeit läßt sich erzielen, wenn die beiden in den Spalt eingefügten Federringe in dem Spalt übereinstimmend vorgespannt sind. Es ist bei einer solchen Ausführung insofern nicht zu befürchten, daß der höher belastete Ring vorzeitig ausfällt mit der Folge der Unbrauchbarkeit des Torsionsschwingungsdämpfers.

Der Ring des größeren Innendurchmessers kann aus einem Werkstoff größerer Härte Shore A bestehen als der Ring des kleineren Innendurchmessers. Die in dem Bereich des Ringes mit dem größeren Innendurchmesser wirksamen, vergleichsweise größeren Kräfte werden dadurch besser aufgefangen.

Die mit dem Torsionsschwingungsdämpfer erzielbare Dämpfungswirkung läßt sich vergrößern, wenn der Ringspalt in axialer Richtung mäandrierend ausgebildet ist.

Um eine besonders gute Dauerhaltbarkeit zu erzielen hat es sich als vorteilhaft bewährt, wenn die Federringe dauerhaft mit dem Ringspalt verklebt sind. Sie können dazu vor ihrer Einfügung in den Ringspalt mit einem Klebstoff beschichtet werden, der nachfolgend verfestigt wird.

Die Erfindung wird nachfolgend anhand der Zeichnungen weiter verdeutlicht. Es zeigen:
Fig. 1 eine erste Ausführung des erfindungsgemäßen Torsionsschwingungsdämpfers in halbgeschnittener Darstellung.
Fig. 2 eine zweite Ausführung in halbgeschnittener Darstellung.
Fig. 3 eine dritte Ausführung in halbgeschnittener Darstellung.

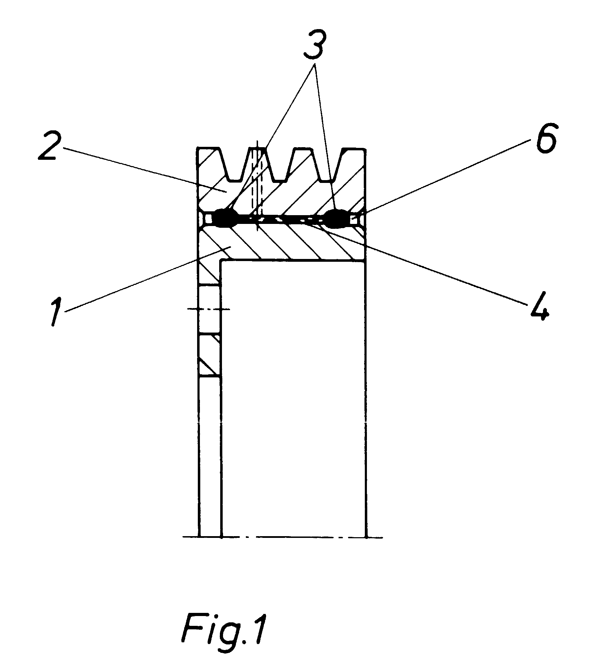

Der in Fig. 1 gezeigte Torsionsschwingungsdämpfer besteht aus einem Schwungring 2 und einem Nabenring 1, die durch zwei Federringe 3 relativ verdrehbar aufeinander abgestützt und miteinander verbunden sind. Die beiden Federringe 3 sind unter elastischer Verformung ihres Querschnitts in den Ringspalt 6 eingefügt. Dieser ist in einem axialen Abstand von den beiderseitigen Enden symmetrisch radial nach innen und nach außen zu Nuten in seinem Querschnitt erweitert, wobei die Nuten in axialer Richtung beiderseits durch Kreisringflächen begrenzt sind, die sich im wesentlichen quer zur Öffnungsrichtung des Spalts 6 erstrecken. Die Federringe 3 haben vor ihrer Einfügung in den Ringspalt 6 ein kreisförmig begrenztes Profil. Es handelt sich bei ihnen um sogenannte O-Ringe.

Nach dem Einfügen in den Ringspalt 6 weisen die Federringe 3 ein Profil auf, das im wesentlichen mit demjenigen des Ringspaltes 6 an ihrer Befestigungsstelle übereinstimmt, d.h. die an dieser Stelle vorgesehenen Nuten sind vollständig durch den Werkstoffkörper der O-Ringe ausgefüllt.

Der axiale Zwischenraum zwischen den beiden Federringen 6 ist mit einer viskosen Flüssigkeit gefüllt. Diese weist bei Raumtemperatur eine Viskosität von mindestens 600 mPas auf. Der Schwungring 2 ist als Riemenscheibe ausgebildet.

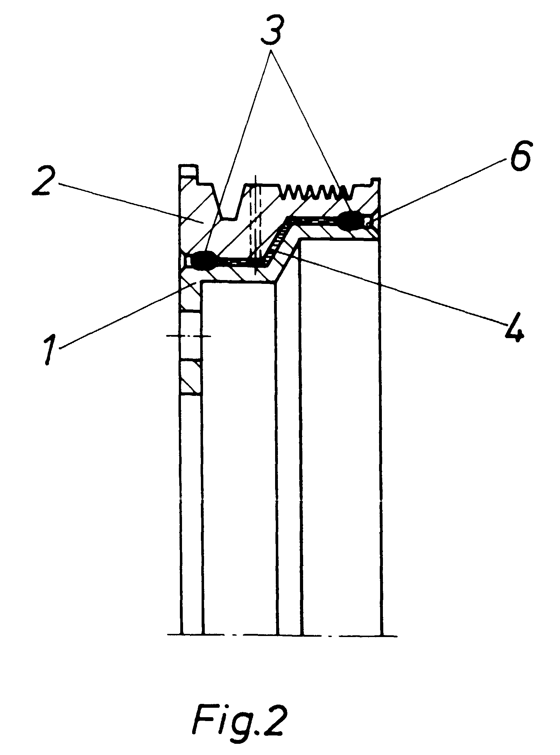

Die in Fig. 2 gezeigte Ausführung unterscheidet sich von der vorstehend beschriebenen dadurch, daß die beiden Federringe 3 einen voneinander abweichenden Innendurchmesser und Querschnitt haben. Hierdurch wird erreicht, daß die beiden Federringe trotz ihres voneinander abweichenden Innendurchmessers während der bestimmungsgemäßen Verwendung spezifisch übereinstimmend vorgespannt sind. Es ist dadurch nicht zu befürchten, daß einer der beiden Ringe durch spezifische Überlastung vorzeitig zerstört wird.

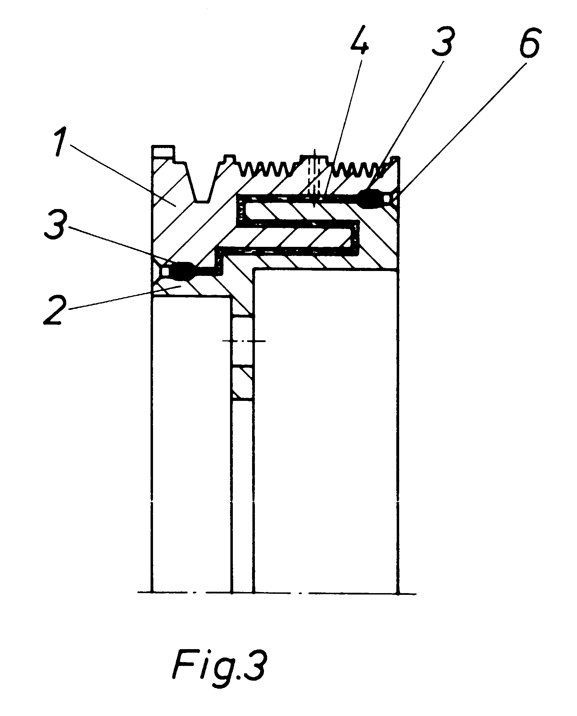

Die in Fig. 3 gezeigte Ausführung unterscheidet sich von den vorstehend beschriebenen dadurch, daß der Ringspalt zwischen den beiden Federringen mäandrierend ausgebildet ist. Hierdurch wird eine vergleichsweise größere Oberfläche der an den Ringspalt angrenzenden Wandungen durch die in dem Ringspalt enthaltene, viskose Flüssigkeit benutzt. Die während der bestimmungsgemäßen Verwendung erzielbare Viskositätsdämpfung ist dadurch deutlich höher als bei den vorstehend beschriebenen Ausführungen.

Der Außenring wird bei der Ausführung nach der Fig. 3 ebenfalls durch eine Riemenscheibe gebildet und der Innenring durch ein Nabenteil, das mit der Stirnfläche einer um eine Achse rotierenden Welle verschraubbar ist.

## Patentansprüche

1. Torsionsschwingungsdämpfer, bei dem zwei einen Abstand voneinander aufweisende Federringe (3) aus Gummi in den Ringspalt (6) zwischen einem Schwungring (2) und einem Nabenring (1) eingefügt sind, wobei der Ringspalt (6) an der Stelle des Federrings (3) in seinem Querschnitt erweitert ist, dadurch gekennzeichnet, daß die Federringe (3) unter elastischer Verformung ihres Querschnitts in den Ringspalt (6) eingefügt sind, wobei zur Festiegung des Schwungrings (2) am Nabenring (1) dieser zwei längs des Ringspalts (6) zueinander versetzt angeordnete radiale Nuten und der Schwungring (2) radial gegenüberliegend zu diesen Nuten ebensolche radiale Nuten aufweist, wobei in jeweils radial gegenüberliegende Nuten des Schwungsrings (2) und des Nabenrings (1) der jeweilige Federring (3) unter elastischer Querschnittsverformung eingreift.

2. Torsionsschwingungsdämpfer nach Anspruch 1, dadurch gekennzeichnet, daß der Ringspalt (6) an der Stelle der Federringe (3) ein im wesentlichen symmetrisch begrenztes Profil aufweist.

3. Torsionsschwingungsdämpfer nach einem der Ansprüche 1 bis 2, dadurch gekennzeichnet, daß der Ringspalt (6) zwischen den Ringen (3) mit einer Flüssigkeit gefüllt ist.

4. Torsionsschwingungsdämpfer nach Anspruch 3, dadurch gekennzeichnet, daß die Flüssigkeit eine Viskosität bei Raumtemperatur von mindestens 500mPas aufweist.

5. Torsionsschwingungsdämpfer nach einem der Ansprüche 2 bis 4, dadurch gekennzeichnet, daß die Federringe einen voneinander abweichenden Innendurchmesser haben.

6. Torsionsschwingungsdämpfer nach Anspruch 5, dadurch gekennzeichnet, daß die beiden Federringe (3) übereinstimmend vorgespannt sind.

7. Torsionsschwingungsdämpfer nach einem der Ansprüche 5 bis 6, dadurch gekennzeichnet, daß der Federring (3) des größeren Innendurchmessers aus einem Werkstoff größerer Härte Shore A besteht als der Ring des kleineren Durchmessers.

8. Torsionsschwingungsdämpfer nach einem der Ansprüche 3 bis 7, dadurch gekennzeichnet, daß der Ringspalt (6) in axialer Richtung mäandrierend ausgebildet ist.

9. Torsionsschwingungsdämpfer nach einem der Ansprüche 1 bis 8, dadurch gekennzeichnet, daß die Federringe (3) mit dem Ringspalt verklebt sind.

## Claims

1. A torsional vibration damper, in which two spring rings (3) made of rubber and having a spacing from one another are inserted into the annular gap (6) between a flywheel ring (2) and a hub ring (1), the annular gap (6) being widened in its cross-section at the location of the spring ring (3), characterized in that the spring rings (3) are inserted into the annular gap (6) with elastic deformation of their cross-section, the hub ring (1) having, for fixing the flywheel ring (2) thereon, two radial grooves arranged offset relative to one another along the annular gap (6), and the flywheel ring (2) having identical radial grooves located radially opposite the former grooves, the respective spring ring (3) engaging with elastic cross-sectional deformation in each case in radially opposite grooves of the flywheel ring (2) and the hub ring (1).

2. A torsional vibration damper according to claim 1, characterized in that the annular gap (6) has an essentially symmetrically bounded profile at the location of the spring rings (3).

3. A torsional vibration damper according to either of claims 1 and 2, characterized in that the annular gap (6) between the rings (3) is filled with a liquid.

4. A torsional vibration damper according to claim 3, characterized in that the liquid has a viscosity at room temperature of at least 500 mPas.

5. A torsional vibration damper according to any one of claims 2 to 4, characterized in that the spring rings have a different inside diameter.

6. A torsional vibration damper according to claim 5, characterized in that the two spring rings (3) are prestressed to the same extent.

7. A torsional vibration damper according to either of claims 5 and 6, characterized in that the spring ring (3) of larger inside diameter is made of a material which has a greater Shore A hardness than the ring of the smaller diameter.

8. A torsional vibration damper according to any one of claims 3 to 7, characterized in that the annular gap (6) is of meandering design in the axial direction.

9. A torsional vibration damper according to any one of claims 1 to 8, characterized in that the spring rings (3) are bonded to the annular gap.

## Revendications

1. Amortisseur de vibrations torsionnelles, dans lequel deux rondelles élastiques (3) en caoutchouc, écartées l'une de l'autre, sont encastrées dans la fente annulaire (6) située entre une bague de bague de volant (2) et une bague de moyeu (1), dans lequel la fente annulaire (6) est élargie dans sa section transversale à l'endroit de la rondelle élastique (3), caractérisé en ce que les rondelles élastiques (3) sont insérées par déformation élastique de leur section transversale dans la fente annulaire (6), auquel cas pour la fixation de la bague de volant (2) contre la bague de moyeu (1), cette dernière présente deux rainures radiales disposées en étant décalées l'une de l'autre le long de la fente annulaire (6) et la bague de volant (2) présente radialement à l'opposé par rapport à ces rainures des rainures radiales similaires, dans lequel le ressort élastique respectif (3) s'engage par déformation transversale élastique dans des rainures, à chaque fois opposées radialement, de la bague de volant (2) et de la bague de moyeu (1).

2. Amortisseur de vibrations torsionnelles selon la revendication 1, caractérisé en ce que la fente annulaire (6) présente, à l'endroit des rondelles élastiques (3), un profil limité essentiellement de façon symétrique.

3. Amortisseur de vibrations torsionnelles selon l'une des revendications 1 à 2, caractérisé en ce que la fente annulaire (6) est remplie d'un liquide entre les rondelles (3).

4. Amortisseur de vibrations torsionnelles selon la revendication 3, caractérisé en ce que le liquide présente une viscosité à température ambiante d'au moins 500mPas.

5. Amortisseur de vibrations torsionnelles selon l'une des revendications 2 à 4, caractérisé en ce que les rondelles élastiques ont un diamètre intérieur différant l'un de l'autre.

6. Amortisseur de vibrations torsionnelles selon la revendication 5, caractérisé en ce que les deux rondelles élastiques (3) sont précontraintes de façon concordante.

7. Amortisseur de vibrations torsionnelles selon l'une des revendications 5 à 6, caractérisé en ce que la rondelle élastique (3) de plus grand diamètre intérieur est composée d'une matière de dureté Shore A supérieure à la rondelle de plus petit diamètre .

8. Amortisseur de vibrations torsionnelles selon l'une des revendications 3 à 7, caractérisé en ce que la fente annulaire (6) est conçue dans le sens axial en décrivant des méandres.

9. Amortisseur de vibrations torsionnelles selon l'une des revendications 1 à 8, caractérisé en ce que les rondelles élastiques (3) sont collées avec la fente annulaire.
